(19) Europäisches Patentamt
European Patent Office
Office européen des brevets

(11) **EP 1 970 733 B1**

(12) **EUROPEAN PATENT SPECIFICATION**

(45) Date of publication and mention
of the grant of the patent:
**07.07.2010 Bulletin 2010/27**

(51) Int Cl.:
***G01V 3/20*** (2006.01)

(21) Application number: **07290316.4**

(22) Date of filing: **13.03.2007**

(54) **An apparatus and method for electrically investigating borehole**

Vorrichtung und Verfahren zur elektrischen Untersuchung eines Bohrlochs

Appareil et procédé d'investigation électrique d'un trou de forage

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**17.09.2008 Bulletin 2008/38**

(73) Proprietor: **Services Pétroliers Schlumberger 75007 Paris (FR)**

(72) Inventor: **Dion, Dominique 78370 Plaisir (FR)**

(74) Representative: **Vandermolen, Mathieu et al Intellectual Property Department Etudes & Productions Schlumberger 1, rue Henri Becquerel B.P. 202 92142 Clamart Cedex (FR)**

(56) References cited:
**EP-A2- 0 540 425          US-A- 3 076 138 US-A1- 2005 264 295**

**Description**

**FIELD OF THE INVENTION**

An aspect of the invention relates to an apparatus used for the electrical investigation of a borehole penetrating geological formations. The apparatus and method enables lateral measurement of the resistivity of the geological formations surrounding the borehole. Another aspect of the invention relates to a method used for the electrical investigation of a borehole penetrating geological formations. The invention finds a particular application in the oilfield industry.

**BACKGROUND OF THE INVENTION**

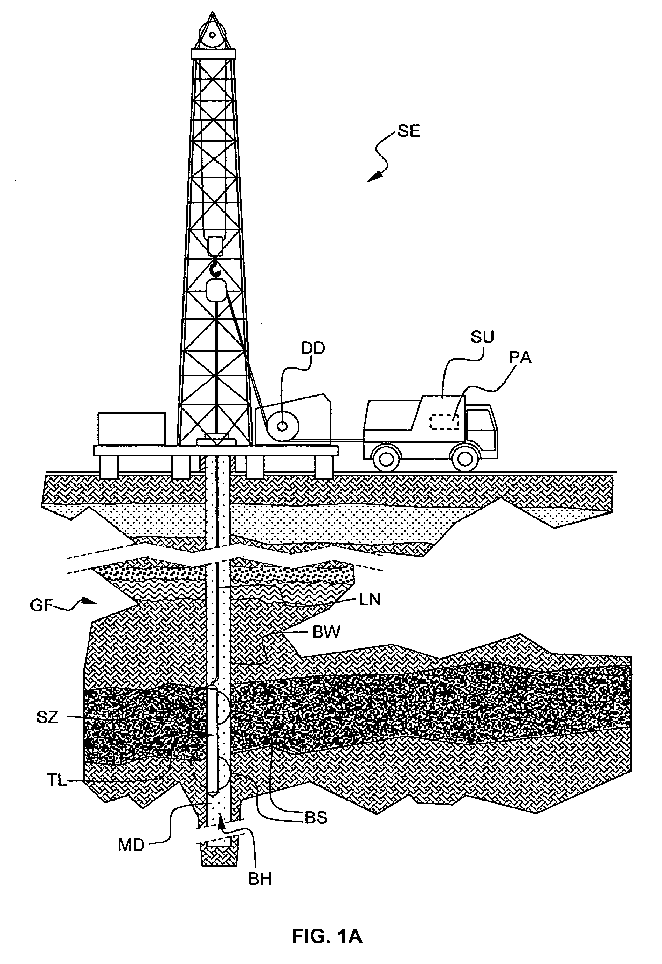

FIG. 1A schematically shows a typical onshore hydrocarbon well location and surface equipments SE above hydrocarbon geological formations GF after drilling operations have been carried out. At this stage, i.e. before a casing string is run and before cementing operations are carried out, the wellbore is a borehole BH filled with a fluid mixture MD. The fluid mixture MD is typically a mixture of drilling fluid and drilling mud. In this example, the surface equipments SE comprise an oil rig and a surface unit SU for deploying a logging tool TL in the well-bore. The surface unit may be a vehicle coupled to the logging tool by a line LN. Further, the surface unit comprises an appropriate device DD for determining the depth position of the logging tool relatively to the surface level. The logging tool TL comprises an electrical logging apparatus that performs electrical investigation of the geological formation GF in order to determine the electric properties, e.g. the resistivity of the geological formation GF surrounding the borehole BH. The logging tool may comprise various other sensors and may provide various measurement data related to the hydrocarbon geological formation GF and/or the fluid mixture DM. These measurement data are collected by the logging tool TL and transmitted to the surface unit SU. The surface unit SU comprises appropriate electronic and software arrangements PA for processing, analyzing and storing the measurement data provided by the logging tool TL. Once the logging tool TL is positioned at a desired depth, a plurality of backup springs BS can be deployed from one side of the tool TL in order to apply the other side of the tool TL against the borehole wall BW. Those versed in the art will recognize that any other appropriate deploying arrangement that is well known in the art can also be used. The resistivity or conductivity of a selected zone SZ can be measured by the electrical logging apparatus. Such a measurement can be repeated for other azimuth and other depth so as to obtain electric images of the borehole wall and a resistivity log of the geological formations.

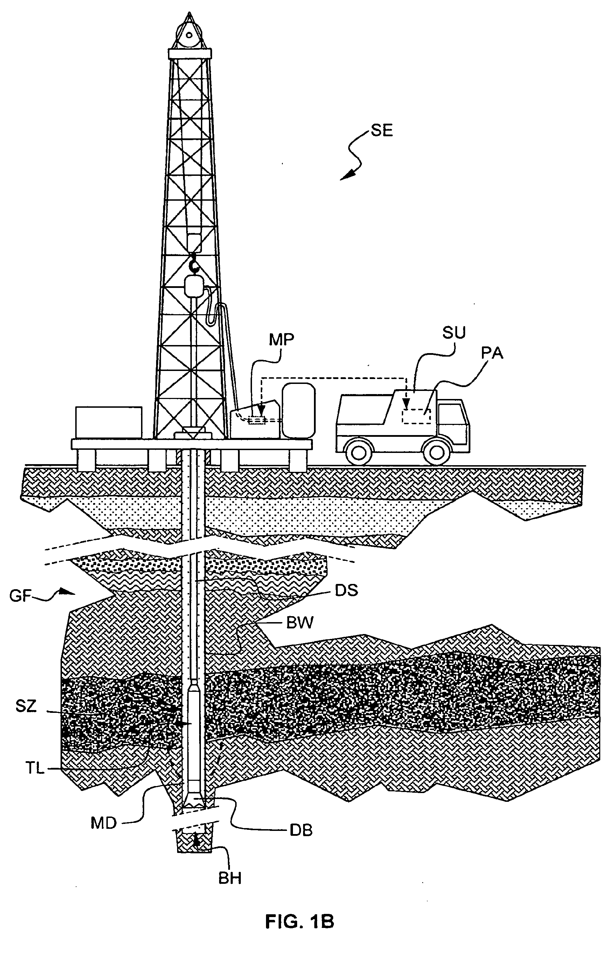

FIG 1B schematically shows a typical onshore hydrocarbon well location and surface equipments SE above hydrocarbon geological formations GF during drilling operations. Those versed in the art know that the electrical logging apparatus of FIG. 1A can also be adapted into a logging-while-drilling tool by mounting the logging tool TL on a drill collar. More precisely, a typical logging-while-drilling tool is incorporated into a bottom-hole assembly attached to the end of a drill string DS with a drill bit DB attached at the extreme end thereof. Measurements can be made either when the drill string is stationary or rotating. In the latter case an additional measurement is made to allow the measurements to be related to the rotational position of the drill string in the borehole. This is done by making simultaneous measurements of the direction of the earth's magnetic field with a compass, which can be related to a reference measurement made when the drill string is stationary. The measurement data that are collected by the logging tool TL may be transmitted by means of the known mud pulse technique to the surface unit SU coupled to a mud pulse receiver MP.

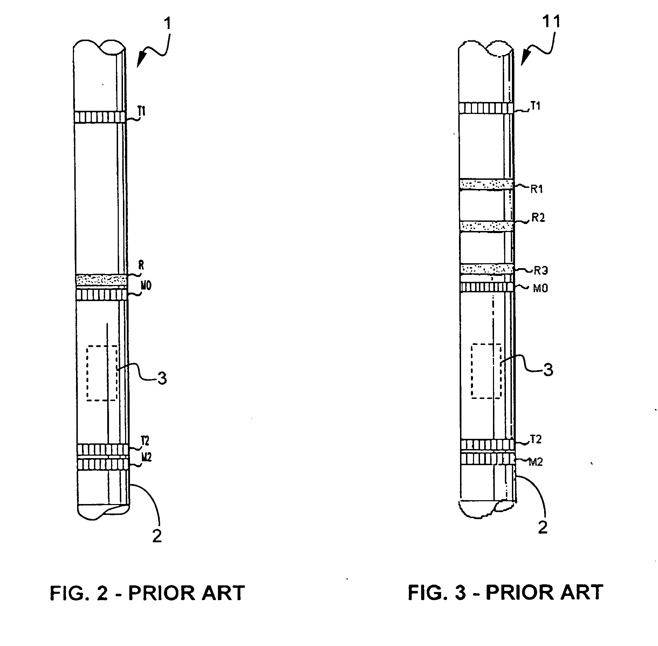

FIGS. 2 and 3 schematically illustrate an apparatus used in electrical investigation of geological formations surrounding a borehole as illustrated in EP 0 540 425 or US 5,339,037.
FIG. 2 shows an electrical investigation apparatus 1 comprising a conductive body 2, two transmitters T1, T2, two axial current sensors M0, M2, one lateral current sensor R and an electronic module 3. The elongated conductive body 2 can be run into the borehole BH. Each transmitter T1, T2 is a toroidal antenna that can apply a potential difference between two conductive sections of the body, sending a current in a path that includes the body and the earth formation. The first transmitter T1 induces a first current. The second transmitter T2 induces a second current. Each axial current sensor M0, M2 is a toroidal antenna surrounding the body that can measure the axial current flowing along the body, or between two adjacent conductive sections of the body. The lateral current sensor R is an electrode that can measure the current either leaving or entering a section of the body's surface. The lateral current sensor R measures a first electrical signal resulting from the first current and a second electrical signal resulting from the second current.
The electronic module 3 or electronic and software arrangement PA of the surface unit SU may derive an indication of the conductivity of the geological formations as being proportional to:

$$(R1 \times M02 + R2 \times M01)/M21,$$

where:

R1 designates the first electrical signal measured when the transmitter T1 is energized,
R2 designates the second electrical signal measured when the transmitter T2 is energized,
M02 designates the axial current measured by sensor M0 when transmitter T2 is energized,
M01 designates the axial current measured by sensor M0 when transmitter T1 is energized, and
M21 designates the axial current measured by sensor M2 when transmitter T1 is energized.

FIG. 3 shows an electrical investigation apparatus 11 having a structure configuration similar to the electrical investigation apparatus 1 of FIG. 2 with two additional lateral current sensors. More precisely, the electrical investigation apparatus 11 comprises the lateral current sensors R1, R2 and R3. Each lateral current sensor is positioned at a different distance from the first transmitter T1. The third lateral current sensor R3 is positioned closely to the axial current sensor M0. The first and second lateral current sensors R1 and R2 are positioned between the first transmitter T1 and the axial current sensor M0, but away from the axial current sensor M0. Each lateral current sensor enables deriving an indication of the resistivity of the geological formations at a different radial depth of investigation.
With the hereinbefore configurations, the hereinbefore formula gives accurate results with the lateral current sensor R or R3 positioned closely to the axial current sensor M0, but less accurate results with the lateral current sensor R1 or R2. Thus, it is necessary that each lateral current sensor is positioned closely to an axial current sensor when an apparatus is used to measure the geological formations at a different radial depth of investigation.
Thus, the prior art apparatus and method have difficulty in precisely focusing the survey current in a selected zone of the geological formations. The prior art apparatuses and methods are complex because each axial current sensor must be associated with a close lateral current sensor for measuring the resistivity at different radial depth of investigation with sufficient accuracy. Otherwise, the calculation of the resistivity results in a lack of accuracy. Further, it may not be mechanically or economically possible to position an axial current sensor closely to each lateral current sensor, particularly in configuration where there are various lateral sensors at different axial position.

## SUMMARY OF THE INVENTION

It is an object of the invention to propose an apparatus and a method that overcomes at least one of the drawbacks of the prior art apparatus and method.
The invention relates to an apparatus according to claim 1 and a method according to claim 14.
Further embodiments are defined by the dependent claims.
The virtual axial current sensor of the invention provides improved focusing for the lateral current sensor. Thus, the invention enables focusing the resistivity measurements to a well defined selected zone of the geological formation than prior art apparatus and method. Consequently, with the invention, the vertical resolution is improved and the shoulder bed effect is reduced while a satisfactory radial depth of investigation is maintained. The corresponding resistivity can be calculated with a greater accuracy than prior art apparatus and method.
These and other aspects of the invention will be apparent from and elucidated with reference to the embodiments described hereinafter.

## BRIEF DESCRIPTION OF THE DRAWINGS

The present invention is illustrated by way of example and not limited to the accompanying figures, in which like references indicate similar elements:

FIGS. 1A and 1B schematically illustrate typical onshore hydrocarbon well locations;
FIGS. 2 and 3 schematically illustrate an apparatus used in electrical investigation of geological formations surrounding a borehole according to the prior art;
FIGS. 4, 5, 6 and 7 schematically illustrate an apparatus used in electrical investigation of geological formations surrounding a borehole according to a first, second, third and fourth embodiment of the invention, respectively;
FIGS. 8 and 10 are graphics showing conductance as a function of depth with the apparatus according to the fourth embodiment of the invention, the conductance being measured without focusing;
FIG. 9 is a graphic showing conductance as a function of depth with the apparatus according to the fourth embodiment of the invention and focused measurement; and
FIG. 11 is a graphic showing conductance as a function of depth with the apparatus according to the fourth embodiment of the invention and focused differential measurement.

## DETAILED DESCRIPTION OF THE INVENTION

In the following description, the terminology "radial depth of investigation" defines a dimension around the borehole along the circumference whatever the orientation of the borehole, namely horizontal, vertical or inclined. Further, the terminology "electronic module" defines an entity made of electronic circuit, software or a combination of both that can performed a plurality of functions that is known by those versed in the art. For example, the electronic module may comprise a processing module for calculation purpose, a power amplifier module for energizing the transmitters, a control module for switching the function of the antenna from transmitter to sensor and vice-versa, a filtering module, a A/D and D/A module, a memory for storing untreated measurements or calculation results, etc....

Furthermore, in the following the indication of the conductivity is indicated as being equivalent to the inversed resistivity and proportional to the current. However, the skilled person knows that this is correct in the direct current case, while this is an approximation in the alternative current case because of the existence of a skin effect correction in particular in the high conductivity range. The skin effect correction is neglected in the following description.

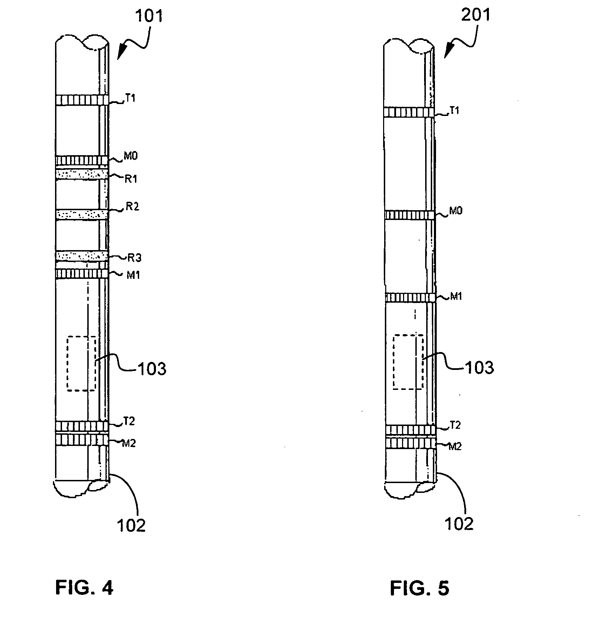

FIG 4 schematically illustrates an electrical investigation apparatus 101 used in electrical investigation of geological formations surrounding a borehole according to a first embodiment of the invention. The apparatus 101 comprises a conductive body 102, two transmitters T1, T2, three axial current sensors M0, M1, M2, three lateral current sensors R1, R2, R3 and an electronic module 103. The conductive body 102 is movable through the borehole BH (cf. FIG. 1). Once the apparatus is positioned at a desired depth in the borehole, the electrical properties (i.e. resistivity and/or conductivity) of a selected zone of the geological formations in front of the apparatus can be measured.

The first transmitter T1 can induce a first current that travels from the first transmitter position in a path that includes a first portion of the body and the selected zone of the geological formations. The second transmitter T2 can induce a second current that travels from the second transmitter position in a path that includes a second portion of the body and the selected zone of the geological formations.

The first M0, second M1 and third M2 axial current sensor measures the axial current flowing along the body at the first, second and third axial current sensor position, respectively.

Each of the first R1, second R2 and third R3 lateral current sensor measures a first electrical signal resulting from the first current and a second electrical signal resulting from the second current induced by the transmitter. Each lateral current sensor being positioned at a different distance from the transmitter, it measures the electrical properties of the selected zone at a different radial depth relatively to the borehole axis.

The electronic module 103 derives an indication of the resistivity and/or conductivity of the formations based on said measured electrical signals and currents.

According to the invention, a virtual axial current sensor is provided. The virtual axial current sensor provides a virtual axial current measurement by interpolating or extrapolating two axial current measurements made at different locations which are not adjacent to the lateral current sensor. More precisely, the lateral current sensor R2 is focused with a virtual axial current sensor derived by interpolating the axial current measured by the first M0 and second M1 axial current sensor.

In the example of FIG. 4, the lateral current sensor R2 is located half way between the first M0 and second M1 axial current sensor, resulting in that the virtual axial current sensor measures a first virtual current VC1 proportional to (M01 + M11)/2 when the first transmitter T1 is energized and a second virtual current VC2 proportional to (M02 + M12)/2 when the second transmitter T2 is energized. In this example, the electronic module 103 derives an indication of the conductivity (or inversed resistivity) of the geological formations as being approximately proportional to:

$$(R21 \times VC2 + R22 \times VC1)/M21,$$

which is equal to:

$$\left(R21 \times \left(\frac{M02 + M12}{2}\right) + R22 \times \left(\frac{M01 + M11}{2}\right)\right)\bigg/M21,$$

where:

R21 designates the first electrical signal (current measured by lateral current sensor R2 when the first transmitter T1 is energized), .

R22 designates the second electrical signal (current measured by lateral current sensor R2 when the second transmitter T2 is energized),

VC1 and VC2 designates the first and second virtual current, respectively,

M02 designates the axial current measured by axial current sensor M0 when transmitter T2 is energized,

M12 designates the axial current measured by axial current sensor M1 when transmitter T2 is energized,

M01 designates the axial current measured by axial current sensor M0 when transmitter T1 is energized,

M11 designates the axial current measured by axial current sensor M1 when transmitter T1 is energized, and

M21 designates the axial current measured by axial current sensor M2 when transmitter T1 is energized.

The above formula can be generalized such that an indication of the conductivity (or inversed resistivity) of the geological formations is approximately proportional to:

$$\left[\frac{R21 \times (a \times M02 + b \times M12)}{a + b} + \frac{R22 \times (a \times M01 + b \times M11)}{a + b}\right]\Big/ M21,$$

where:

a designates the distance between the lateral current sensor R2 and the axial current sensor M1, and

b designates the distance between the lateral current sensor R2 and the first axial current sensor M0.

In the particular example of FIG. 4, the distance from the lateral current sensor R1 to the axial current sensor M1 is nine times the distance from the lateral current sensor R1 to the axial current sensor M0. The measurement of the lateral current sensor R1 can be focused by a virtual axial current sensor at the location of R1. The virtual axial current sensor measures a first virtual current VC1' proportional to 0,9 x M01 + 0,1 x M11 when the first transmitter T1 is energized and a second virtual current VC2' proportional to 0,9 x M02 + 0,1 x M12 when the second transmitter T2 is energized. In this example, the electronic module 103 derives an indication of the conductivity (or inversed resistivity) of the geological formations in front of the lateral current sensor R1 as being approximately proportional to:

$$(R11 \times VC2' + R12 \times VC1')/M21,$$

which is equal to:

$$[R11 \times (0,9 \times M02 + 0,1 \times M12) + R12 \times (0,9 \times M01 + 0,1 \times M11)]/M21$$

where:

R11 designates the first electrical signal (current measured by lateral current sensor R1 when the first transmitter T1 is energized), and

R12 designates the first electrical signal (current measured by lateral current sensor R1 when the first transmitter T1 is energized).

FIG. 5 schematically illustrates an electrical investigation apparatus 201 used in electrical investigation of geological formations surrounding a borehole according to a second embodiment of the invention. The apparatus 201 comprises a conductive body 102, two transmitters T1, T2, three axial current sensors M0, M1, M2 and an electronic module 103. The second embodiment mainly differs from the first one in that the second embodiment does not comprise the three lateral current sensors R1, R2, R3.

Similarly to the first embodiment, the first T1 and second T2 transmitter can induce a first and a second current, respectively, that travels from the first and second transmitter position, respectively, in a path that includes a first and second portion of the body and the selected zone of the geological formations, respectively.

The first M0, second M1 and third M2 axial current sensor measures the axial current flowing along the body at the first, second and third axial current sensor position, respectively. The first M0 and second M1 axial current sensors are positioned between the first T1 and second T2 transmitters. The third axial current sensor M2 is positioned closed to the second transmitter T2.

The electronic module 103 derives an indication of the resistivity and/or conductivity of the formations based on said measured electrical signals and currents.

In the example of FIG. 5 and according to the invention, a virtual axial current sensor and a lateral current sensor are provided. The virtual axial current sensor provides a virtual axial current measurement by interpolating or extrapolating two axial current measured by the first M0 and second M1 axial current sensor at their respective position. The lateral current sensor, formed by the combination of the first M0 and second M1 axial current sensor, determines a lateral current based on the difference of axial current measured by the first axial current sensor M0 and second axial current sensor M1. Alternatively, the lateral current sensor can be formed by the two toroidal transformers M0 and M1 mounted in series-opposition as described in US 3,305,771. The lateral current sensor covers the entire selected zone between the locations of the first M0 and second M1 axial current sensor. The virtual axial current sensor is located half way between the first M0 and second M1 axial current sensors. In this example, the electronic module 103 derives an indication of the conductivity (or inversed resistivity) of the geological formations as being approximately proportional to:

$$\left( (M01 - M11) \times \left( \frac{M02 + M12}{2} \right) + (M12 - M02) \times \left( \frac{M01 + M11}{2} \right) \right) \Big/ M21,$$

which is equal to:

$$(M12 \times M01 - M02 \times M11) / M21.$$

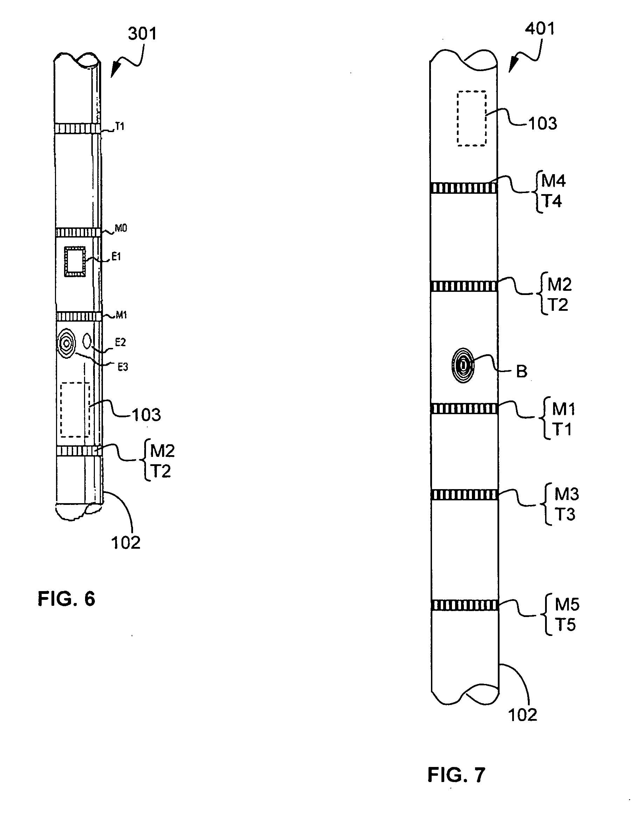

FIG. 6 schematically illustrates an electrical investigation apparatus 301 used in electrical investigation of geological formations surrounding a borehole according to a third embodiment of the invention. The apparatus 301 comprises a conductive body 102, a first transmitter T1, two axial current sensors M0 and M1, a common antenna used either as a second transmitter T2 or a third axial current sensor M2, three lateral current sensors with azimuthal sensitivity E1, E2, E3, and an electronic module 103. An additional lateral current sensor, formed by the combination of the first M0 and second M1 axial current sensor, is also provided by computing the difference between axial currents measured by the axial current sensors M0 and M1, or by connecting two toroidal transformers in series-opposition as described in US 3,305,771. The lateral current sensor covers the entire selected zone between the locations of the axial current sensors M0 and M1. The third embodiment mainly differs from the second one in that it comprises, in addition to the lateral sensor formed by the axial current sensor M0 and M1, three lateral current sensors with azimuthal sensitivity E1, E2, E3, and a common antenna used either as transmitter T2 or as axial current sensor M2.

Similarly to the first embodiment, the first transmitter T1 and the common antenna used either as transmitter T2 can induce a first and a second current, respectively, that travels from the first and second transmitter position, respectively, in a path that includes a first and second portion of the body and the selected zone of the geological formations, respectively.

The first M0 and second M1 axial current sensors and the common antenna used as a third axial current sensor M2 measures the axial current flowing along the body at the first, second and third axial current sensor position, respectively.

The first M0 and second M1 axial current sensors are positioned between the first T1 and second T2 transmitters. The position of the third axial current sensor M2 is identical to the position of the second transmitter T2.

In this embodiment, the same toroidal antenna is alternatively a transmitter T2 and an axial current sensor M2 when the first transmitter T1 is energized. For example, the antenna is automatically switched from one function to the other by a control and switch circuit (not shown) of the electronic module 103.

The electronic module 103 derives an indication of the resistivity and/or conductivity of the formations based on said measured electrical signals and currents.

In the example of FIG. 6 and according to the invention, a virtual axial current sensor is provided. The virtual axial current sensors provide virtual axial current measurements by interpolating or extrapolating two axial currents measured by the first M0 and second M1 axial current sensor at their respective position. The lateral current determined by the difference between the axial current measurements at sensors M0 and M1, or by connecting the first M0 and second M1 axial current sensor in series-opposition, can be focused with the virtual axial current sensor derived from interpolating the measurements of the first M0 and second M1 axial current sensors.

The lateral current sensor E1 is a current transformer recessed in the body 102. The lateral current sensor E2 is an electrode insulated from the body 102. The lateral current sensor E3 is a button electrode, i.e an array of current measuring electrodes and voltage sensing electrodes (such a button electrode is described in details in US 6,373,254). Advantageously, all these lateral current sensors have an azimuthal sensitivity.

The lateral current measurements made by the lateral current sensor E1 can be focused with the virtual axial current sensor derived from interpolating the measurements of the first M0 and second M1 axial current sensors.

The lateral current measurement made by the lateral current sensor E2 or E3 can be focused with the virtual axial current sensor derived from extrapolating the measurements of the first M0 and second M1 axial current sensors.

The electronic module 103 derives an indication of the conductivity (or inversed resistivity) of the geological formations in a way similar to the one described in relation with FIG. 4.

FIG. 7 schematically illustrates an electrical investigation apparatus 401 used in electrical investigation of geological formations surrounding a borehole according to a fourth embodiment of the invention. It is to be emphasized that in the fourth embodiment, the number of transmitter and axial current sensor is only an example, those skilled in the art may easily adapt the invention to less or more transmitter and axial current sensor. The apparatus 401 comprises a conductive body 102, a first common antenna used either as a first transmitter T1 or a first axial current sensor M1, a second common antenna used either as a second transmitter T2 or a second axial current sensor M2, a third common antenna used either as a third transmitter T3 or a third axial current sensor M3, a fourth common antenna used either as a fourth transmitter T4 or a fourth axial current sensor M4, a fifth common antenna used either as a fifth transmitter T5 or a fifth axial current sensor M5, a lateral current sensor B, and an electronic module 103.

In this embodiment all the common antennas can be used alternatively as a transmitter and as an axial current sensor. Each common antenna when acting as a transmitter T1, T2, T3, T4, T5 can induce a current that travels from the transmitter position in a path that includes a portion of the body and the selected zone of the geological formations. The common antennas are toroidal antenna.

Each common antenna when acting as an axial current sensor M1, M2, M3, M4, M5 measures the axial current flowing along the body at the axial current sensor position. As an example, the common antenna may be positioned all along the body 102 with each common antenna at an equal distance from a directly adjacent common antenna. As an example, the lateral current sensor B may be positioned between the first common antenna T1, M1 and the second common antenna T2, M2.

The lateral current sensor B may be a button electrode which is described in details in US 6,373,254.

The five common antennas which are alternatively used as transmitter and as axial current sensor enables obtaining focused measurements at four different radial depths of investigation from the single lateral current sensor B. More precisely, in turn, each common antenna is used as a transmitter, while the four other common antennas can be used as axial current sensors. Alternatively, time multiplexing and/or frequency multiplexing on subsets of the five common antennas can be implemented.

The automatic switching of the common antenna from one function to the other, or the time multiplexing and/or frequency multiplexing may be implemented by a control and switch module (not shown) of the electronic module 103. Such an electronic module is known in the art and will not be further described.

The lateral current measurements made by the lateral current sensor B can be focused with a virtual axial current sensor. The virtual axial current sensor is derived from interpolating the measurements of two common antennas, both antennas being operated as axial current sensors.

With the fourth embodiment of FIG. 7, at least two focused conductivities with various radial depth of investigation can be determined.

With increasing radial depth of investigation, a first focused conductivity measurement CB3 or CM3 can be determined by energizing the third T3 and fourth T4 transmitters, and a second focused conductivity measurement CB4 or CM4 can be determined by energizing the fourth T4 and fifth T5 transmitters.

As an example related to the second measurement CB4 or CM4, the electronic module 103 derives an indication of the conductivity (or inversed resistivity) of the geological formations as being approximately proportional to:

$$CB4 = \left( B4 \times \left( \frac{a \times M15 + b \times M25}{a + b} \right) + B5 \times \left( \frac{a \times M14 + b \times M24}{a + b} \right) \right) \Big/ M54$$

or with the lateral current sensor comprising the space between the axial current sensors M1 and M2:

$$CBi = \left( Bi \times \left( \frac{a \times M1j + b \times M2j}{a + b} \right) + Bj \times \left( \frac{a \times M1i + b \times M2i}{a + b} \right) \right) \Big/ Mji$$

where:

B4 designates the current measured by lateral current sensor B when the fourth transmitter T4 is energized,

B5 designates the current measured by lateral current sensor B when the fifth transmitter T5 is energized,
b designates the distance between the lateral current sensor B and the first common antenna T1,M1,
a designates the distance between the lateral current sensor B and the second common antenna T2, M2,
M15 designates the axial current measured by axial current sensor M1 when transmitter T5 is energized,
M25 designates the axial current measured by axial current sensor M2 when transmitter T5 is energized,
M14 designates the axial current measured by axial current sensor M1 when transmitter T4 is energized,
M24 designates the axial current measured by axial current sensor M2 when transmitter T4 is energized, and
M54 designates the axial current measured by axial current sensor M5 when transmitter T4 is energized.

Similar formulae can be determined for the third measurements CB3 or CM3.

In the general case using as transmitters the antenna Ti (i>2) and the common antenna Tj, Mj (j>i), the electronic module 103 derives an indication of the conductivity (or inversed resistivity) of the geological formations as being approximately proportional to:

$$CBi = \left( Bi \times \left( \frac{a \times M1j + b \times M2j}{a + b} \right) + Bj \times \left( \frac{a \times M1i + b \times M2i}{a + b} \right) \right) \Big/ Mji$$

or with the lateral current sensor comprising the space between the axial current sensors M1 and M2:

$$CMi = \left| M2i \times M1j - M1i \times M2j \right| / Mji$$

where:

Bi designates the current measured by lateral current sensor B when the transmitter Ti is energized,
Bj designates the current measured by lateral current sensor B when the transmitter Tj is energized,
b designates the distance between the lateral current sensor B and the first common antenna T1,M1,
a designates the distance between the lateral current sensor B and the second common antenna T2, M2,
M1 j designates the axial current measured by axial current sensor M1 when transmitter Tj is energized,
M2j designates the axial current measured by axial current sensor M2 when transmitter Tj is energized,
M1i designates the axial current measured by axial current sensor M1 when transmitter Ti is energized,
M2i designates the axial current measured by axial current sensor M2 when transmitter Ti is energized, and
Mji designates the axial current measured by axial current sensor Mj when transmitter Ti is energized.

In the fourth embodiment, at least four antennas may be required, namely one transmitting antenna Ti, two receiving antennas M1, M2, and at least one common antenna Tj, Mj. Advantageously, the antennas Ti, M1 and M2 may also be common antenna in order to enable others measurements at a different radial depth of investigation.

In the above general case presented hereinbefore, it will be apparent to those versed in the art that, by reciprocity, the transmitters and current sensors can be inverted without departing from the scope of the present invention. In particular, a reciprocal sensor arrangement can be designed by replacing the antennas Ti, M1, M2 and (Tj, Mj) by the antennas Mi, T1, T2, and (Mj, Tj), respectively. In this case, T1, T2, Tj are transmitters, and M1 and M2 are axial current sensors. The above formula becomes:

$$CMi = \left| Mi2 \times Mj1 - Mi1 \times Mj2 \right| / Mij$$

where:

Mi2 designates the axial current measured by axial current sensor Mi when transmitter T2 is energized,
Mj2 designates the axial current measured by axial current sensor Mj when transmitter T2 is energized,
Mi1 designates the axial current measured by axial current sensor Mi when transmitter T1 is energized,
Mj1 designates the axial current measured by axial current sensor Mj when transmitter T1 is energized, and
Mij designates the axial current measured by axial current sensor Mi when transmitter Tj is energized. Thus, the invention is an improvement over the prior art because in the prior art, the difference of two large numbers (M2i - M1i) is considered. The difference of two large numbers is subject to a large error if either one of the two current sensors has an incorrect gain or scale factor. In contradistinction, with the invention, if one of the sensors has an incorrect gain or scale factor, the same error in percentage is made on both terms of the subtraction. As a consequence, the relative error on the focused measurement is not amplified.

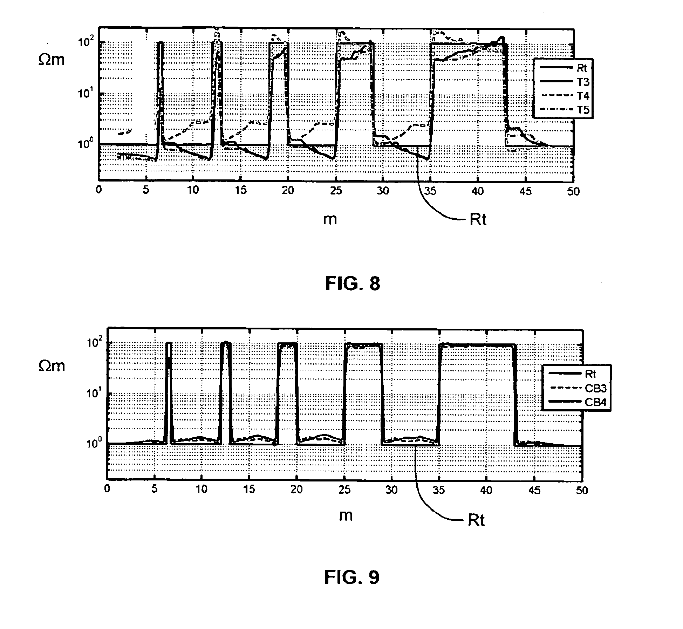

FIG. 8 is a graphic showing conductivity as a function of depth with the apparatus according to the fourth embodiment of the invention, the conductivity being measured without focusing. The log has been performed by simulating a portion of geological formation comprising beds of alternating resistivity 1 Ωm and 100 Ωm and of varying thickness (illustrated by the plain curve referenced Rt). The unfocused measurements are the measurements of the lateral current sensor B with either the third T3, or the fourth T4 or the fifth T5 transmitter being energized. It is to be noted that the measurements resolution and accuracy of the conductivity (inverse of the resistivity) are poor.

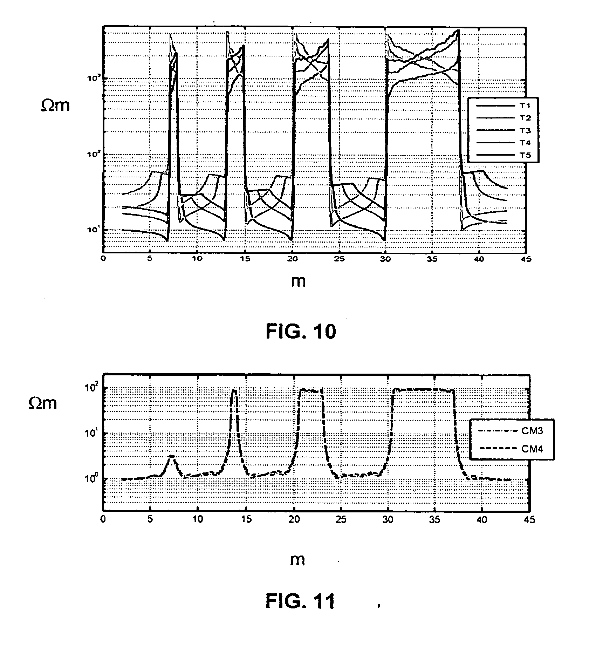

FIGS.9 and 11 highlight the improvement obtained with the focusing method of the invention. It also demonstrates that, with the apparatus and method of the invention, it is not necessary to closely associate an axial current sensor with a lateral current sensor for measuring the resistivity at different radial depth of investigation.

FIG. 9 is a graphic showing resistivity as a function of depth with the apparatus according to the fourth embodiment of the invention. More precisely, FIG. 9 shows the resistivity log resulting from the third CB3 and fourth CB4 focused conductivity measurements. The log has been performed in the same portion of geological formation as FIG. 8 that comprises beds of alternating resistivity 1 Ωm and 100 Ωm and of varying thickness (illustrated by the plain curve referenced Rt). It is to be noted that the measurements resolution and accuracy of the resistivities are excellent.

FIG. 10 illustrates unfocused measurements of the lateral current sensor B with either the first T1, or the second T2, or the third T3, or the fourth T4, or the fifth T5 transmitter being energized. It is to be noted that the measurements resolution and accuracy of the conductivity (inverse of the resistivity) are poor.

FIG. 11 is a graphic showing resistivity as a function of depth with the apparatus according to the fourth embodiment of the invention and focused differential measurement. More precisely, FIG. 11 shows the log resulting from the third CM3 and fourth CM4 focused differential measurements. The log has been simulated in a portion of geological formation as illustrated in FIG. 10 that comprises beds of alternating resistivity 1 Ωm and 100 Ωm and of varying thickness. It is to be noted that the measurements resolution is degraded compared to the focused conductivity measurements because the lateral current sensor is much larger. However, the measurements are very accurate in thick beds.

## FINAL REMARKS

It will be apparent for a person skilled in the art that the invention is applicable to onshore and offshore hydrocarbon well locations.

Further, those skilled in the art understand that the invention is not limited to vertical borehole as depicted in the drawings: the invention is also applicable to inclined borehole or horizontal borehole.

Furthermore, it will also be apparent to those skilled in the art that the calculation of the conductivity or resistivity according to the invention can be performed elsewhere than in an electronics module within the instrument; for example, the calculation can be performed at the surface.

Finally, it is also apparent for a person skilled in the art that application of the invention is not limited to the oilfield industry as the invention can also be applied in others types of geological surveys.

The drawings and their description hereinbefore illustrate rather than limit the invention which is defined by the appended claims.

Any reference sign in a claim should not be construed as limiting the claim. The word "comprising" does not exclude the presence of other elements than those listed in a claim. The word "a" or "an" preceding an element does not exclude the presence of a plurality of such element.

## Claims

1. An apparatus used in electrical investigation of geological formations (GF) surrounding a borehole (BH) by deriving the resistivity or conductivity of the formation, the apparatus comprising:

   an electrically conductive body (102) movable through the borehole (BH),
   at least one first transmitter (T1) for inducing a first current from a first transmitter position and traveling in a path that includes a first portion of the body and a selected zone (SZ) of the geological formations (GF),
   at least one second transmitter (T2) for inducing a second current from a second position and traveling in a path that includes a second portion of the body and the selected zone (SZ), the second transmitter (T2) position being different from the first transmitter (T1) position on the body,

at least a first (M0) and second (M1) axial current sensors for measuring a first and a second axial current flowing along the body, respectively, the first and second axial current sensor position on the body being different from each other,

a virtual axial current sensor providing a virtual axial current measurement by interpolating or extrapolating the measured first and second axial current, and

a calculating module for deriving an indication of the resistivity or conductivity of the formation based on the virtual axial current.

2. The apparatus of claim 1, further comprising:

at least a third (M2) axial current sensor for measuring a third axial current flowing along the body, the third axial current sensor position on the body being different from the first and second axial current sensors,

at least one lateral current sensor (R2, MO/M1, E1, E2, E3, B) disposed on the body for measuring a first electrical signal resulting from the first current and a second electrical signal resulting from the second current,

a virtual axial current sensor providing a virtual axial current measurement by interpolating or extrapolating at least two axial current measurements made at different positions which are not adjacent to the at least one lateral current sensor, and

a calculating module (103, PA) for deriving an indication of the resistivity or conductivity of the selected zone (SZ) based on the measured first electrical signal, second electrical signal, axial currents and the calculated virtual axial current.

3. The apparatus of claim 2, wherein the at least one lateral current sensor is formed by the first (M0) and second (M1) axial current sensors and determines a lateral current based on a difference of the first axial current measured by the first axial current sensor (M0) and the second axial current measured by the second axial current sensor (M1).

4. The apparatus of any preceding claim, wherein one of the axial current sensor (M2) is positioned adjacent to the transmitter (T2).

5. The apparatus of any preceding claim, wherein a common antenna (M1/T1, M2/T2, M3/T3, M4/T4, M5/T5) selectively forms an axial current sensor or a transmitter.

6. The apparatus of any preceding claim, wherein at least one of the axial current sensor (M0, M1) is positioned adjacent to a lateral current sensor (R2, M0/M1, E1, E2, E3, B).

7. The apparatus of any preceding claim, wherein the first electrical signal is the current measured by the lateral current sensor (R2) when the first transmitter (T1) is energized and is designated R21, the second electrical signal is the current measured by the lateral current sensor (R2) when the second transmitter (T2) is energized and is designated R22, the axial current measured by the first axial current sensor (M0) when the second transmitter (T2) is energized is designated M02, the axial current measured by the second axial current sensor (M1) when the second transmitter (T2) is energized is designated M12, the axial current measured by the axial current sensor (M0) when the first transmitter (T1) is energized is designated M01, the axial current measured by the second axial current sensor (M1) when the first transmitter (T1) is energized is designated M11, the axial current measured by the third axial current sensor (M2) when the first transmitter (T1) is energized is designated M21, the lateral current sensor (R2) being positioned between the first (M0) and the second (M1) axial current sensor, the distance between the lateral current sensor R and the axial current sensor M0 is designated b, the distance between the lateral current sensor R and the axial current sensor M1 is designated a, and

wherein the calculating module (103, PA) derives the indication of the resistivity of the formation as being approximately inversely proportional to, or the indication of the conductivity of the formations as being approximately proportional to:

$$\left[\frac{R21\times(a\times M02 + b\times M12)}{a+b} + \frac{R22\times(a\times M01 + b\times M11)}{a+b}\right]\bigg/ M21.$$

8. The apparatus according to any one of the claims 1 to 6, wherein the first axial current measured by the first axial current sensor (M0) when the first transmitter (T1) is energized is designated M01, the second axial current measured by the second axial current sensor (M1) when the second transmitter (T2) is energized is designated M12, the third axial current measured by the first axial current sensor (M0) when the second transmitter (T2) is energized is designated M02, the fourth axial current measured by the second axial current sensor (M1) when the first transmitter (T1) is energized is designated M11, and
wherein the electronic module (103) derives the indication of the inverse of resistivity or conductivity of the formations as being approximately proportional to:

$$(M12 \times M01 - M02 \times M11)/M21 \,.$$

9. The apparatus according to any one of the claims 1 to 6, wherein the apparatus comprises:

- at least four common antennas at different position along the body (102) used either as a transmitter (Ti, Tj) or as an axial current sensor (M1, M2, Mj), each common antenna being used as a transmitter while the other common antennas being used as axial current sensors, in turn, each transmitter inducing a current from a transmitter position and traveling in a path that includes a portion of the body and a selected zone (SZ) of the geological formations (GF),
- at least one lateral current sensor (B) disposed on the body for measuring a first current designated Bi when the transmitter Ti is energized and a second current designated Bj when the transmitter Tj is energized,
- the distance between the lateral current sensor (B) and the first common antennas (T1, M1) is designated b, the distance between the lateral current sensor (B) and the common antennas (T2, M2) is designated a,

wherein the axial current measured by axial current sensor M1 when transmitter Tj is energized is designated M1j, the axial current measured by axial current sensor M2 when transmitter Tj is energized is designated M2j, the axial current measured by axial current sensor M1 when transmitter Ti is energized is designated M1i, the axial current measured by axial current sensor M2 when transmitter Ti is energized is designated M2i, the axial current measured by axial current sensor Mj when transmitter Ti is energized is designated Mji, and
wherein the electronic module (103) derives the indication of the resistivity of the formation as being approximately inversely proportional to, or the indication of the conductivity of the formations as being approximately proportional to:

$$CBi = \left( Bi \times \left( \frac{a \times M1j + b \times M2j}{a+b} \right) + Bj \times \left( \frac{a \times M1i + b \times M2i}{a+b} \right) \right) \Big/ Mji \,.$$

10. The apparatus according to any one of the claims 1 to 6, wherein the apparatus comprises:

- at least four common antennas at different position along the body (102) used either as a transmitter (Ti, Tj) or as an axial current sensor (M1, M2, Mj), each common antenna being used as a transmitter while the other common antennas being used as axial current sensors, in turn, each transmitter inducing a current from a transmitter position and traveling in a path that includes a portion of the body and a selected zone (SZ) of the geological formations (GF),
- a lateral current sensor comprising the space between a first (M1) and a second (M2) common antenna operated as axial current sensor,

wherein the axial current measured by axial current sensor M1 when transmitter Tj is energized is designated M1j, the axial current measured by axial current sensor M2 when transmitter Tj is energized is designated M2j, the axial current measured by axial current sensor M1 when transmitter Ti is energized is designated M1i, the axial current measured by axial current sensor M2 when transmitter Ti is energized is designated M2i, the axial current measured by axial current sensor Mj when transmitter Ti is energized is designated Mji, and
wherein the electronic module (103) derives the indication of the resistivity of the formation as being approximately inversely proportional to, or the indication of the conductivity of the formations as being approximately proportional to:

$$CMi = \left| M2i \times M1j - M1i \times M2j \right| / Mji$$

**11.** The apparatus according to any preceding claim, wherein the transmitter is a toroidal antenna or an electrode.

**12.** The apparatus according to any preceding claim, wherein the axial current sensor is a toroidal antenna.

**13.** The apparatus according to any preceding claim, wherein the lateral current sensor is a ring electrode or a button electrode.

**14.** A method of electrical investigation of geological formations (GF) surrounding a borehole (BH) by deriving a resistivity or conductivity of the formation, comprising the steps of:

positioning an electrically conductive body (102) movable through the borehole (BH) in front of a selected zone (SZ) of the geological formations (GF),
inducing a first current from a first transmitter (T1) position that travels in a path that includes a first portion of the body and the selected zone (SZ), and a second current from a second transmitter (T2) position that travels in a path that includes a second portion of the body and the selected zone (SZ), the second transmitter (T2) position being different from the first transmitter (T1) position on the body,
measuring a first and a second axial current flowing along the body, respectively, at a first (M0) and second (M1) axial current sensor position on the body that are different from each other,
calculating a virtual axial current measurement by interpolating or extrapolating the measured first and second axial current, and
deriving an indication of the resistivity or the conductivity based on the virtual axis current.

**15.** The method of claim 14, further comprising
measuring a third axial current flowing along the body at a third (M2) axial current sensor position on the body that is different from the first and second axial current positions,
measuring a first electrical signal resulting from the first current and a second electrical signal resulting from the second current by means of at least one lateral current sensor (R2) disposed on the body,
calculating a virtual axial current measurement by interpolating or extrapolating two axial current measurements made at different positions which are not adjacent to the at least one lateral current sensor position, and
deriving an indication of the resistivity or conductivity of the selected zone (SZ) based on the measured first electrical signal, second electrical signal, axial currents and the calculated virtual axial current.

**16.** The method according to claim 14, further comprising the step of calculating a lateral current based on a difference of the first axial current measured by the first axial current sensor (M0) and the second axial current measured by the second axial current sensor (M1).

**Patentansprüche**

**1.** Vorrichtung, die bei der elektrischen Untersuchung von ein Bohrloch (BH) umgebenden geologischen Formationen (GF) durch Ableiten des spezifischen elektrischen Widerstandes oder der spezifischen elektrischen Leitfähigkeit der Formation verwendet wird, wobei die Vorrichtung umfasst:

einen elektrisch leitenden Körper (102), der durch das Bohrloch (BH) beweglich ist,
wenigstens einen ersten Sender (T1), um einen ersten Strom von einer ersten Senderposition zu induzieren und auf einen Weg zu schicken, der einen ersten Abschnitt des Körpers und eine ausgewählte Zone (SZ) der geologischen Formationen (GF) enthält,
wenigstens einen zweiten Sender (T2), um einen zweiten Strom von einer zweiten Position zu induzieren und auf einen Weg zu schicken, der einen zweiten Abschnitt des Körpers und die ausgewählte Zone (SZ) enthält, wobei die Position des zweiten Senders (T2) von der Position des ersten Senders (T1) an dem Körper verschieden ist,
wenigstens einen ersten Axialstromsensor (M0) und einen zweiten Axialstromsensor (M1), um einen ersten bzw. einen zweiten axialen Strom zu messen, der längs der Körpers fließt, wobei die Positionen des ersten und des zweiten Axialstromsensors an dem Körper voneinander verschieden sind,

einen Sensor für virtuellen axialen Strom, der eine Messung eines virtuellen axialen Stroms durch Interpolieren oder Extrapolieren des gemessenen ersten und zweiten axialen Stroms schafft, und

ein Rechenmodul, um eine Angabe des spezifischen elektrischen Widerstandes oder der spezifischen elektrischen Leitfähigkeit der Formation auf der Grundlage des virtuellen axialen Stroms abzuleiten.

2.  Vorrichtung nach Anspruch 1, die ferner umfasst:

wenigstens einen dritten Axialstromsensor (M2), um einen dritten Axialstrom zu messen, der längs des Körpers fließt, wobei die Position des dritten Axialstromsensors am Körper von jenen des ersten und des zweiten Axialstromsensors verschieden ist,

wenigstens einen Lateralstromsensor (R2, M0/M1, E1, E2, E3, B), der am Körper angeordnet ist, um ein erstes elektrisches Signal, das sich aus dem ersten Strom ergibt, und ein zweites elektrisches Signal, das sich aus dem zweiten Strom ergibt, zu messen,

einen Sensor für virtuellen axialen Strom, der eine Messung eines virtuellen axialen Stroms durch Interpolieren oder Extrapolieren von wenigstens zwei Messungen axialer Ströme, die an unterschiedlichen Positionen erfolgen, die zu dem wenigstens einen Lateralstromsensor nicht benachbart sind, schafft, und

ein Rechenmodul (103, PA), um eine Angabe des spezifischen elektrischen Widerstandes oder der spezifischen elektrischen Leitfähigkeit der ausgewählten Zone (SZ) auf der Grundlage des gemessenen ersten elektrischen Signals, des gemessenen zweiten elektrischen Signals, der gemessenen axialen Ströme und des berechneten virtuellen axialen Stroms abzuleiten.

3.  Vorrichtung nach Anspruch 2, wobei der wenigstens eine Lateralstromsensor durch den ersten (M0) und den zweiten (M1) Axialstromsensor gebildet ist und einen lateralen Strom auf der Grundlage einer Differenz zwischen dem ersten axialen Strom, der durch den Sensor (M0) für den ersten axialen Strom gemessen wird, und dem zweiten axialen Strom, der durch den Sensor (M1) für den zweiten axialen Strom gemessen wird, bestimmt.

4.  Vorrichtung nach einem vorhergehenden Anspruch, wobei der Axialstromsensor (M2) benachbart zu dem Sender (T2) positioniert ist.

5.  Vorrichtung nach einem vorhergehenden Anspruch, wobei eine gemeinsame Antenne (M1/T1, M2/T2, M3/T3, M4/T4, M5/T5) wahlweise einen Axialstromsensor oder einen Sender bildet.

6.  Vorrichtung nach einem vorhergehenden Anspruch, wobei wenigstens einer der Axialstromsensoren (M0, M1) benachbart zu dem Lateralstromsensor (R2, M0/M1, E1, E2, E3, B) positioniert ist.

7.  Vorrichtung nach einem vorhergehenden Anspruch, wobei das erste elektrische Signal der Strom ist, der durch den Lateralstromsensor (R2) gemessen wird, wenn der erste Sender (T1) erregt wird, und mit R21 bezeichnet wird, das zweite elektrische Signal der Strom ist, der durch den Lateralstromsensor (R2) gemessen wird, wenn der zweite Sender (T2) erregt wird, und mit R22 bezeichnet wird, der axiale Strom, der durch den ersten Axialstromsensor (M0) gemessen wird, wenn der zweite Sender (T2) erregt wird, mit M02 bezeichnet wird, der axiale Strom, der durch den zweiten Axialstromsensor (M1) gemessen wird, wenn der zweite Sender (T2) erregt wird, mit M12 bezeichnet wird, der axiale Strom, der durch den Axialstromsensor (M0) gemessen wird, wenn der erste Sender (T1) erregt wird, mit M01 bezeichnet wird, der axiale Strom, der durch den zweiten Axialstromsensor (M1) gemessen wird, wenn der erste Sender (T1) erregt wird, mit M11 bezeichnet wird, der axiale Strom, der durch den dritten Axialstromsensor (M2) gemessen wird, wenn der erste Sender (T1) erregt wird, mit M21 bezeichnet wird, der Lateralstromsensor (R2) zwischen dem ersten (M0) und dem zweiten (M1) Axialstromsensor positioniert ist, der Abstand zwischen dem Lateralstromsensor R und dem Axialstromsensor M0 mit b bezeichnet wird, der Abstand zwischen dem Lateralstromsensor R und dem Axialstromsensor M1 mit a bezeichnet wird und

wobei das Rechenmodul (103, PA) die Angabe des spezifischen elektrischen Widerstandes der Formation als angenähert umgekehrt proportional zu oder die Angabe der spezifischen elektrischen Leitfähigkeit der Formationen als angenähert proportional zu

$$\left[ \frac{R21 \times (a \times M02 + b \times M12)}{a+b} + \frac{R22 \times (a \times M01 + b \times M11)}{a+b} \right] \Big/ M21$$

ableitet.

8. Vorrichtung nach einem der Ansprüche 1 bis 6, wobei der erste axiale Strom, der durch den ersten Axialstromsensor (M0) gemessen wird, wenn der erste Sender (T1) erregt wird, mit M01 bezeichnet wird, der zweite axiale Strom, der durch den zweiten Axiaistromsensor (M1) gemessen wird, wenn der zweite Sender (T2) erregt wird, mit M12 bezeichnet wird, der dritte axiale Strom, der durch den ersten Axialstromsensor (M0) gemessen wird, wenn der zweite Sender (T2) erregt wird, mit M02 bezeichnet wird, der vierte axiale Strom, der durch den zweiten Axialstromsensor (M1) gemessen wird, wenn der erste Sender (T1) erregt wird, mit M11 bezeichnet wird und wobei das elektronische Modul (103) die Angabe des Kehrwerts des spezifischen elektrischen Widerstandes oder der spezifischen elektrischen Leitfähigkeit der Formationen als angenähert proportional zu

$$(M12 \times M01 - M02 \times M11)/M21$$

ableitet.

9. Vorrichtung nach einem der Ansprüche 1 bis 6, wobei die Vorrichtung umfasst:

   - wenigstens vier gemeinsame Antennen an verschiedenen Positionen längs des Körpers (102), die entweder als ein Sender (Ti, Tj) oder als ein Axialstromsensor (M1, M2, Mj) verwendet werden, wobei jede gemeinsame Antenne als ein Sender verwendet wird, während die anderen gemeinsamen Antennen als Axialstromsensoren verwendet werden, wobei wiederum jeder Sender einen Strom von einer Senderposition induziert und auf einen Weg schickt, der einen Abschnitt des Körpers und eine ausgewählte Zone (SZ) der geologischen Formationen (GF) enthält,
   - wobei ein Lateralstromsensor (B) am Körper angeordnet ist, um einen ersten Strom, der mit Bi bezeichnet wird, zu messen, wenn der Sender Ti erregt wird, und um einen zweiten Strom, der mit Bj bezeichnet wird, zu messen, wenn der Sender Tj erregt wird,
   - wobei der Abstand zwischen dem Lateralstromsensor (B) und den ersten gemeinsamen Antennen (T1, M1) mit b bezeichnet wird und der Abstand zwischen dem Lateralstromsensor (B) und den gemeinsamen Antennen (T2, M2) mit a bezeichnet wird,

   wobei der axiale Strom, der durch den Axialstromsensor M1 gemessen wird, wenn der Sender Tj erregt wird, mit M1j bezeichnet wird, der axiale Strom, der durch den Axialstromsensor M2 gemessen wird, wenn der Sender Tj erregt wird, mit M2j bezeichnet wird, der axiale Strom, der durch den Axialstromsensor M1 gemessen wird, wenn der Sender Ti erregt wird, mit M1 i bezeichnet wird, der axiale Strom, der durch den Axialstromsensor M2 gemessen wird, wenn der Sender Ti erregt wird, mit M2i bezeichnet wird, und der axiale Strom, der durch den Axialstromsensor Mj gemessen wird, wenn der Sender Ti erregt wird, mit Mji bezeichnet wird, und wobei das elektronische Modul (103) die Angabe des spezifischen elektrischen Widerstandes der Formation als angenähert umgekehrt proportional zu oder die Angabe der spezifischen elektrischen Leitfähigkeit der Formationen als angenähert proportional zu

$$CBi = \left( Bi \times \left( \frac{a \times M1j + b \times M2j}{a + b} \right) + Bj \times \left( \frac{a \times M1i + b \times M2i}{a + b} \right) \right) \Big/ Mji$$

ableitet.

10. Vorrichtung nach einem der Ansprüche 1 bis 6, wobei die Vorrichtung umfasst:

    - wenigstens vier gemeinsame Antennen an verschiedenen Positionen längs des Körpers (102), die entweder als ein Sender (Ti, Tj) oder als ein Axialstromsensor (M1, M2, Mj) verwendet werden, wobei jede gemeinsame Antenne als ein Sender verwendet wird, während die anderen gemeinsamen Antennen als Axialstromsensoren verwendet werden, wobei wiederum jeder Sender einen Strom von einer Senderposition induziert und auf einen Weg schickt, der einen Abschnitt des Körpers und eine ausgewählte Zone (SZ) der geologischen Formationen (GF) enthält,
    - einen Lateralstromsensor, der den Raum zwischen einer ersten (M1) und einer zweiten (M2) gemeinsamen Antenne, die als Axialstromsensor betrieben werden, umfasst,

wobei der axiale Strom, der durch den Axialstromsensor M1 gemessen wird, wenn der Sender Tj erregt wird, mit M1j bezeichnet wird, der axiale Strom, der durch den Axialstromsensor M2 gemessen wird, wenn der Sender Tj erregt wird, mit M2j bezeichnet wird, der axiale Strom, der durch den Axialstromsensor M1 gemessen wird, wenn der Sender Ti erregt wird, mit M1i bezeichnet wird, der axiale Strom, der durch den Axialstromsensor M2 gemessen wird, wenn der Sender Ti erregt wird, mit M2i bezeichnet wird und der axiale Strom, der durch den Axialstromsensor Mj gemessen wird, wenn der Sender Ti erregt wird, mit Mji bezeichnet wird, und

wobei das elektronische Modul (103) die Angabe des spezifischen elektrischen Widerstandes der Formation als angenähert umgekehrt proportional zu oder die Angabe der spezifischen elektrischen Leitfähigkeit der Formationen als angenähert proportional zu

$$CMi = \left| M2i \times M1j - M1i \times M2j \right| / Mji$$

ableitet.

11. Vorrichtung nach einem vorhergehenden Anspruch, wobei der Sender eine Torroidantenne oder eine Elektrode ist.

12. Vorrichtung nach einem vorhergehenden Anspruch, wobei der Axialstromsensor eine Torroidantenne ist.

13. Vorrichtung nach einem vorhergehenden Anspruch, wobei der Lateralstromsensor eine Ringelektrode oder eine Knopfelektrode ist.

14. Verfahren für die elektrische Untersuchung von ein Bohrloch (BH) umgebenden geologischen Formationen (GF) durch Ableiten eines spezifischen elektrischen Widerstandes oder einer spezifischen elektrischen Leitfähigkeit der Formation, das die folgenden Schritte umfasst:

Positionieren eines elektrisch leitenden Körpers (102), der durch das Bohrloch (BH) beweglich ist, vor einer ausgewählten Zone (SZ) der geologischen Formationen (GF),
Induzieren eines ersten Stroms von einer Position eines ersten Senders (T1), der auf einem Weg läuft, der einen ersten Abschnitt des Körpers und die ausgewählte Zone (SZ) enthält, und eines zweiten Stroms von der Position eines zweiten Senders (T2), der auf einem Weg läuft, der einen zweiten Abschnitt des Körpers und die ausgewählte Zone (SZ) enthält, wobei die Position des zweiten Senders (T2) von der Position des ersten Senders (T1) am Körper verschieden ist,
Messen eines ersten und eines zweiten axialen Stroms, die jeweils längs des Körpers fließen, an einer Position eines ersten Axialstromsensors (M0) bzw. an einer Position eines zweiten Axialstromsensors (M1) am Körper, die voneinander verschieden sind,
Berechnen eines Messwerts eines virtuellen axialen Stroms durch Interpolieren oder Extrapolieren des gemessenen ersten und des gemessenen zweiten axialen Stroms und
Ableiten einer Angabe des spezifischen elektrischen Widerstandes oder der spezifischen elektrischen Leitfähigkeit auf der Grundlage des virtuellen axialen Stroms.

15. Verfahren nach Anspruch 14, das ferner umfasst:

Messen eines dritten axialen Stroms, der längs des Körpers fließt, an einer Position eines dritten Axialstromsensors (M2) am Körper, die von den Positionen des ersten und des zweiten Axialstromsensors verschieden ist,
Messen eines ersten elektrischen Signals, das sich aus dem ersten Strom ergibt, und eines zweiten elektrischen Signals, das sich aus dem zweiten Strom ergibt, mittels wenigstens eines am Körper angeordneten Lateralstromsensors (R2),
Berechnen eines Messwerts eines virtuellen axialen Stroms durch Interpolieren oder Extrapolieren von zwei Messwerten axialer Ströme, die an verschiedenen Positionen vorgenommen werden, die zu der Position des wenigstens einen Lateralstromsensors nicht benachbart sind, und
Ableiten einer Angabe des spezifischen elektrischen Widerstandes oder der spezifischen elektrischen Leitfähigkeit der ausgewählten Zone (SZ) auf der Grundlage des gemessenen ersten elektrischen Signals, des gemessenen zweiten elektrischen Signals, der gemessenen axialen Ströme und des berechneten virtuellen axialen Stroms.

16. Verfahren nach Anspruch 14, das ferner den Schritt des Berechnens eines lateralen Stroms auf der Grundlage einer Differenz zwischen dem ersten axialen Strom, der durch den ersten Axialstromsensor (M0) gemessen wird, und dem zweiten axialen Strom, der durch den zweiten Axialstromsensor (M1) gemessen wird, umfasst.

**Revendications**

1. Appareil utilisé dans l'investigation électrique de formations géologiques (GF) entourant un trou de forage (BH) par déduction de la résistivité ou conductivité de la formation, l'appareil comprenant :

   un corps électriquement conducteur (102) mobile à travers le trou de forage (BH),
   au moins un premier émetteur (T1) pour induire un premier courant d'une première position d'émetteur et parcourant un chemin qui comprend une première portion du corps et une zone choisie (SZ) des formations géologiques (GF),
   au moins un deuxième émetteur (T2) pour induire un deuxième courant d'une deuxième position et parcourant un chemin qui comprend une deuxième portion du corps et la zone choisie (SZ), la position du deuxième émetteur (T2) étant différente de la position du premier émetteur (T1) sur le corps,
   au moins un premier (M0) et un deuxième (M1) capteur de courant axial pour mesurer un premier et un deuxième courant axial circulant le long du corps, respectivement, les positions des premier et deuxième capteurs de courant axial sur le corps étant différentes l'une de l'autre,
   un capteur de courant axial virtuel fournissant une mesure de courant axial virtuel par interpolation ou extrapolation des premier et deuxième courants axiaux mesurés, et
   un module de calcul pour déduire une indication de la résistivité ou conductivité de la formation sur la base du courant axial virtuel.

2. Appareil selon la revendication 1, comprenant en outre :

   au moins un troisième capteur de courant axial (M2) pour mesurer un troisième courant axial circulant le long du corps, la position du troisième capteur de courant axial sur le corps étant différente de celle des premier et deuxième capteurs de courant axial,
   au moins un capteur de courant latéral (R2, M0/M1, E1, E2, E3, B) disposé sur le corps pour mesurer un premier signal électrique résultant du premier courant et un deuxième signal électrique résultant du deuxième courant,
   un capteur de courant axial virtuel fournissant une mesure de courant axial virtuel par interpolation ou extrapolation d'au moins deux mesures de courant axial effectuées à différentes positions qui ne sont pas adjacentes au au moins un capteur de courant latéral, et
   un module de calcul (103, PA) pour déduire une indication de la résistivité ou conductivité de la zone choisie (SZ) sur la base du premier signal électrique, du deuxième signal électrique, des courants axiaux mesurés et du courant axial virtuel calculé.

3. Appareil selon la revendication 2, dans lequel le au moins un capteur de courant latéral est formé par les premier (M0) et deuxième (M1) capteurs de courant axial et détermine un courant latéral sur la base d'une différence du premier courant axial mesuré par le premier capteur de courant axial (M0) et du deuxième courant axial mesuré par le deuxième capteur de courant axial (M1).

4. Appareil selon l'une quelconque des revendications précédentes, dans lequel l'un des capteurs de courant axial (M2) est positionné de manière adjacente à l'émetteur (T2).

5. Appareil selon l'une quelconque des revendications précédentes, dans lequel une antenne commune (M1/T1, M2/T2, M3/T3, M4/T4, M5/T5) forme sélectivement un capteur de courant axial ou un émetteur.

6. Appareil selon l'une quelconque des revendications précédentes, dans lequel au moins l'un des capteurs de courant axial (M0, M1) est positionné, de manière adjacente à un capteur de courant latéral (R2, M0/M1, E1, E2, E3, B).

7. Appareil selon l'une quelconque des revendications précédentes, dans lequel le premier signal électrique est le courant mesuré par le capteur de courant latéral (R2) lorsque le premier émetteur (T1) est alimenté en énergie et est désigné R21, le deuxième signal électrique est le courant mesuré par le capteur de courant latéral (R2) lorsque le deuxième émetteur (T2) est alimenté en énergie et désigné R22, le courant axial mesuré par le premier capteur de courant axial (M0) lorsque le deuxième émetteur (T2) est alimenté en énergie est désigné M02, le courant axial mesuré par le deuxième capteur de courant axial (M1) lorsque le deuxième émetteur (T2) est alimenté en énergie est désigné M12, le courant axial mesuré par le capteur de courant axial (M0) lorsque le premier émetteur (T1) est alimenté en énergie est désigné M01, le courant axial mesuré par le deuxième capteur de courant axial (M1) lorsque le premier émetteur (T1) est alimenté en énergie est désigne M11, le courant axial mesuré par le troisième capteur de courant axial (M2) lorsque le premier émetteur (T1) est alimenté en énergie est désigné M21, le capteur de courant latéral (R2) étant positionné entre le premier (M0) et le deuxième (M1) capteur de courant axial, la distance entre le capteur de courant latéral et le capteur de courant axial (M0) est désignée b, la distance entre le capteur de courant latéral R et le capteur de courant axial M1 est désignée a, et

dans lequel le module de calcul (103, PA) déduit l'indication de la résistivité de la formation comme étant approximativement inversement proportionnelle à, ou l'indication de la conductivité des formations comme étant approximativement proportionnelle à :

$$\left[\frac{R21 \times (a \times M02 + b \times M12)}{a + b} + \frac{R22 \times (a \times M01 + b \times M11)}{a + b}\right]/M21$$

8. Appareil selon l'une quelconque des revendications 1 à 6, dans lequel le premier courant axial mesuré par le premier capteur de courant axial (M0) lorsque le premier émetteur (T1) est alimenté en énergie est désigné M01, le deuxième courant axial mesuré par le deuxième capteur de courant axial (M1) lorsque le deuxième émetteur (T2) est alimenté en énergie est désigné M12, le troisième courant axial mesuré par le premier capteur de courant axial (M0) lorsque le deuxième émetteur (T2) est alimenté en énergie est désigné M02, le quatrième courant axial mesuré par le deuxième capteur de courant axial (M1) lorsque le premier émetteur (T1) est alimenté en énergie est désigné M11, et dans lequel le module électronique (103) déduit l'indication de l'inverse de la résistivité ou conductivité des formations comme étant approximativement.proportionnelle à :

$$(M12 \times M01 - M02 \times M11)/M21.$$

9. Appareil selon l'une quelconque des revendications 1 à 6, dans lequel l'appareil comprend :

- au moins quatre antennes communes à différentes positions le long du corps (102) utilisées soit comme émetteur (Ti, Tj), soit comme capteur de courant axial (M1, M2, MJ), chaque antenne commune étant utilisée comme un émetteur alors que les autres antennes communes sont utilisées comme capteurs de courant axial, à leur tour, chaque émetteur induisant un courant à partir d'une position d'émetteur et parcourant un chemin qui comprend une portion de corps et une zone choisie (SZ) des formations géologiques (GF),
- au moins un capteur de courant latéral (B) disposé sur le corps pour mesurer un premier courant désigné Bi lorsque l'émetteur Ti est alimenté en énergie et un deuxième courant désigné Bj lorsque l'émetteur Tj est alimenté en énergie,
- la distance entre le capteur de courant latéral (B) et les premières antennes communes (T1, M1) est désignée b, la distance entre le capteur de courant latéral (B) et les antennes communes (T2, M2) est désignée a,

dans lequel le courant axial mesuré par le capteur de courant axial M1 lorsque l'émetteur Tj est alimenté en énergie est désigné M1j, le courant axial mesuré par le capteur de courant axial M2 lorsque l'émetteur Tj est alimenté en énergie est désigné M2j, le courant axial mesuré par le capteur de courant axial M1 lorsque l'émetteur Ti est alimenté en énergie est désigné M1i, le courant axial mesuré par le capteur de courant axial M2 lorsque l'émetteur Ti est alimenté en énergie est désigné M2i, le courant axial mesuré par le capteur de courant axial Mj lorsque l'émetteur Ti est alimenté en énergie est désigné Mji, et dans lequel le module électronique (103) déduit l'indication de la résistivité de la formation comme étant approximativement inversement proportionnelle à, ou l'indication de la conductivité des formations comme étant approximativement proportionnelle à :

$$CBi = \left(Bi \times \left(\frac{a \times M1j + b \times M2j}{a + b}\right) + Bj \times \left(\frac{a \times M1i + b \times M2i}{a + b}\right)\right)\Big/ Mji.$$

**10.** Appareil selon l'une quelconque des revendications 1 à 6, dans lequel l'appareil comprend :

au moins quatre antennes communes à différentes positions le long du corps (102) utilisées soit comme émetteur (Ti, Tj), soit comme capteur de courant axial (M1, M2, Mj), chaque antenne commune étant utilisée comme émetteur tandis que les autres antennes communes sont utilisées comme capteurs de courant axial, à leur tour, chaque émetteur induisant un courant à partir d'une position d'émetteur et parcourant un chemin qui comprend une portion du corps et une zone choisie (SZ) des formations géologiques (GF),

- un capteur de courant latéral comprenant l'espace entre une première (M1) et une deuxième (M2) antenne commune utilisée comme capteur de courant axial,

dans lequel le courant axial mesuré par le capteur de courant axial M1 lorsque l'émetteur Tj est alimenté en énergie est désigné M1j, le courant axial mesuré par le capteur de courant axial M2 lorsque l'émetteur Tj est alimenté en énergie est désigné M2j, le courant axial mesuré par le capteur de courant axial M1 lorsque l'émetteur Ti est alimenté en énergie est désigné M1i, le courant axial mesuré par le capteur de courant axial M2 lorsque l'émetteur Ti est alimenté en énergie est désigné M2i, le courant axial mesuré par le capteur de courant axial Mj lorsque l'émetteur Ti est alimenté en énergie est désigné Mji, et

dans lequel le module électronique (103) déduit l'indication de la résistivité de la formation comme étant approximativement inversement proportionnelle à, ou l'indication de la conductivité des formations comme étant approximativement proportionnelle à :

$$CMi = \left| M2i \times M1j - M1i \times M2j \right| / Mji.$$

**11.** Appareil selon l'une quelconque des revendications précédentes, dans lequel l'émetteur est une antenne toroïdale ou une électrode.

**12.** Appareil selon l'une quelconque des revendications précédentes, dans lequel le capteur de courant axial est une antenne toroïdale.

**13.** Appareil selon l'une quelconque des revendications précédentes, dans lequel le capteur de courant latéral est une électrode annulaire ou une électrode à bouton.

**14.** Procédé d'investigation électrique de formations géologiques (GF) entourant un trou de forage (BH) par déduction d'une résistivité ou conductivité de la formation, comprenant les étapes consistant à :

positionner un corps électriquement conducteur (102) mobile à travers le trou de forage (BH) en face d'une zone (SZ) choisie des formations géologiques (GF),
induire un premier courant d'une position du premier émetteur (T1) qui parcourt un chemin qui comprend une première portion du corps et la zone (SZ) choisie, et un deuxième courant d'une position d'un deuxième émetteur (T2) qui parcourt un chemin qui comprend une deuxième portion du corps et la zone (SZ) choisie, la position du deuxième émetteur (T2) étant différente de la position du premier émetteur (T1) sur le corps,
mesurer un premier et un deuxième courant axial circulant le long du corps, respectivement, à une première (M0) et une deuxième (M1) position de capteur de courant axial sur le corps qui sont différentes l'une de l'autre,
calculer une mesure de courant axial virtuel par interpolation ou extrapolation des premier et deuxième courants axiaux mesurés, et
déduire une indication de la résistivité ou de la conductivité sur la base du courant axial virtuel.

**15.** Procédé selon la revendication 14, comprenant en outre :

la mesure d'un troisième courant axial circulant le long du corps à une troisième position de capteur de courant axial (M2) sur le corps qui est différente des première et deuxième positions de courant axial,

la mesure d'un premier signal électrique résultant du premier courant et d'un deuxième signal électrique résultant du deuxième courant au moyen d'au moins un capteur de courant latéral (R2) disposé sur le corps,

le calcul d'une mesure de courant axial virtuel par interpolation ou extrapolation de deux mesures de courant axial effectuées à différentes positions qui ne sont pas adjacentes à la au moins une position de capteur de courant latéral, et

la déduction d'une indication de la résistivité ou conductivité de la zone (SZ) choisie sur la base du premier signal électrique, du deuxième signal électrique, des courants axiaux mesurés et du courant axial virtuel calculé.

16. Procédé selon la revendication 14, comprenant en outre l'étape de calcul d'un courant latéral sur la base d'une différence du premier courant axial mesuré par le premier capteur de courant axial (M0) et du deuxième courant axial mesuré par le deuxième capteur de courant axial (M1).

**FIG. 1A**

**FIG. 1B**

FIG. 2 - PRIOR ART

FIG. 3 - PRIOR ART

22

FIG. 4

FIG. 5

FIG. 6

FIG. 7

FIG. 8

FIG. 9

EP 1 970 733 B1

FIG. 10

FIG. 11

26

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0540425 A
- US 5339037 A
- US 3305771 A
- US 6373254 B